Europäisches Patentamt

European Patent Office

Office européen des brevets

(11) Numéro de publication: **0 265 346 B1**

# FASCICULE DE BREVET EUROPEEN

(45) Date de publication de fascicule du brevet:
24.04.91

(51) Int. Cl.⁵: **F23G 5/02**, F23G 5/44,
F23G 5/50, B03B 9/06

(21) Numéro de dépôt: **87402382.3**

(22) Date de dépôt: **22.10.87**

(54) **Dispositif d'incinération des déchets industriels.**

(30) Priorité: **23.10.86 FR 8614705**

(43) Date de publication de la demande:
**27.04.88 Bulletin 88/17**

(45) Mention de la délivrance du brevet:
**24.04.91 Bulletin 91/17**

(84) Etats contractants désignés:
**AT BE CH DE ES GB GR IT LI LU NL SE**

(56) Documents cités:
**CH-A- 601 728**
**FR-A- 1 530 755**
**US-A- 3 159 353**

(73) Titulaire: **TUNZINI NESSI ENTREPRISES
D'EQUIPEMENTS
250, Route de l'Empereur
F-92508 Rueil Malmaison(FR)**

Titulaire: **SEDIBEX
3, rue Dufay
F-76100 Rouen(FR)**

(72) Inventeur: **Bernard, Jean
8, rue Emile Souvestres
F-95160 Montmorency(FR)**
Inventeur: **Fauquant, Jean-Claude
Chemin de la Bredouille Saint-Laurent de
Brevedent
F-76700 Harfleur(FR)**

(74) Mandataire: **Le Vaguerese, Sylvain Jacques
SAINT-GOBAIN RECHERCHE 39, quai Lucien
Lefranc
F-93304 Aubervilliers Cedex(FR)**

## Description

L'invention a trait au traitement par incinération des déchets industriels pâteux et plus spécialement à ceux de ces déchets dont la viscosité ne permet ni le pelletage ni le pompage par les moyens usuels.

Il est connu par exemple du brevet CH-601 728 d'incinérer des déchets industriels dans un four tournant mixte alimenté à la fois par des déchets liquides grâce à une canne d'injection et par des déchets solides par une gueule d'enfournement ; un tel type de four permet d'assurer une incinération régulière et complète, la rotation du four évitant que les matières corrosives ne s'accumulent dans le bas du four, entraînant sa dégradation rapide et des inhomogénéités de température.

Mais, les déchets industriels présentent une gamme très étendue de viscosité ; en fait, ce terme déchets industriels recouvre tout à la fois les eaux usées et des goudrons particulièrement visqueux. Si les premiers cités peuvent être facilement pompés, les seconds peuvent être aussi aisément manipulés à l'aide de grappins. Malheureusement, il a été observé depuis quelques années que devaient de plus en plus fréquemment être traités par les usines d'incinération des produits semi-liquides et pâteux n'entrant dans aucune des catégories ci-dessus et que nous qualifierons par la suite simplement de pâteux.

Le pompage de ces pâtes étant naturellement exclu, de tels produits sont généralement chargés dans les fours d'incinération comme s'il s'agissait réellement de solides, ce qui n'est toutefois pas sans soulever de nombreux inconvénients.

On constate tout d'abord que ces produits pâteux ont une grande tendance à s'étaler sur les parois du four dès leur chargement. De ce fait, ils occasionnent une usure prématurée dans la zone d'enfournement, de la couche de réfractaires protégeant le four. De plus, il s'agit là de phénomènes très brûtaux, la composition des déchets industriels étant par essence même fort peu régulière et homogène.

Cet étalement des déchets pâteux entraîne dans cette zone d'enfournement la formation d'une épaisse couche de lave qui peu à peu obstrue l'entrée du four et qui nécessite l'arrêt des installations et son élimination à l'aide d'engins de travaux publics du type marteau-piqueur, engins qui eux-mêmes, ne favorisent pas la longévité des refractaires du four.

Enfin ces déchets pâteux présentent souvent des points "flash" très inférieurs à ceux des déchets solides "vrais" et il peut se produire une inflammation spontanée en amont du four avec un risque de propagation de l'incendie dans la trémie de chargement.

Pour tenter de pallier à ces divers inconvénients, il est d'usage de mélanger à ces déchets pâteux des solides pulvérulents, soient des autres déchets à traiter par incinération, des sciures ou encore des cendres recyclées. En fait, aucune de ces solutions ne peut être considérée comme satisfaisante ; d'une part, les usines d'incinération de déchets industriels se doivent de traiter ceux-ci dans un minimum de temps et il est impossible de différer l'incinération d'un produit jusqu'à ce que l'on dispose simultanément et de déchets pulvérulents et de déchets pâteux, d'autre part, les cendres recyclées ont un pouvoir calorifique pratiquement nul qui nuit au bon rendement de l'installation.

Il est connu de l'état de la technique constitué par FR-A-1 530 755 de séparer une boue en une partie semi-fluide et une partie liquide, cette dernière étant utilisée pour piéger les constituants malodorants de la boue, les deux parties étant ensuite introduites séparément dans un four tournant. Toutefois, FR-A-1 530 755 concerne des déchets dont la teneur en matière solide n'excède pas 8% et aucune indication n'est donnée quant à la manière d'effectuer cette séparation. De US-A-3 159 353, il est par ailleurs connu un procédé de traitements des ordures ménagères en déchets solides de grande ou petite taille et en déchets en suspension ou solution dans l'eau, ces derniers étant directement injectables. De CH-A-601 728, il est connu un four tournant avec une trémie d'alimentation en déchets solides et un dispositif d'injection des déchets liquides. Mais dans aucun de ces cas n'est posé le problème des pâteux non pompables, ni pelletables, ni injectables.

La demanderesse a cherché à améliorer le traitement de ces déchets pâteux par une séparation en une partie liquide, c'est-à-dire pouvant être traités par des moyens usuels de pompage et une partie solide.

Pour être satisfaisante, une telle séparation se devait toutefois d'être suffisamment rapide pour ne pas ralentir l'ensemble du processus et de ne pas nécessiter la surveillance humaine à proximité immédiate de l'installation, compte tenu des dangers inhérents à tous les déchets industriels. Ces considérations ont conduit la demanderesse à écarter tout procédé de séparation poussée, par exemple par centrifugation.

L'invention concerne un procédé de traitement par incinération dans un four tournant de déchets industriels constitués au moins pour partie de produits pâteux non pompables, où l'on alimente un crible vibrant avec un produit pâteux enrichi en liquides, on effectue une séparation grossière à l'aide du crible vibrant en une partie solide et en une partie liquide, on introduit ladite partie solide dans le four par une trémie d'alimentation en matériaux solides et on projette ladite partie liquide à l'intérieur du four tournant et à distance de la zone d'enfournement.

Pour mettre en oeuvre ce procédé de traitement, il est proposé un dispositif comportant une trémie d'alimentation du four tournant, réceptionnant les matières solides, délivrées par un grappin, un crible vibreur, réceptionnant les produits pâteux enrichis en liquides par un grappin étanche, une pompe d'injection et une canne d'injection.

Conformément à l'invention le produit pâteux à incinérer est stocké dans une fosse de réception, la partie solide en est séparée grossièrement à l'aide d'un crible vibrant avant d'être conduite directement à la trémie d'alimentation du four, alors que la partie liquide est conduite par une goulotte de réception à une pompe d'injection qui la projette à l'intérieur du four tournant et à distance de la zone d'enfournement, l'alimentation du crible s'effectuant avec un produit pâteux enrichi en liquides. Pour cela, la fosse de réception est dans un premier temps vidangée à l'aide d'un grappin à coquilles ajourées qui permet un égouttage sommaire et un chargement direct de la trémie d'alimentation du four avec un matériau essentiellement solide.

Dans une seconde étape, la vidange de la fosse de réception est poursuivie à l'aide d'un grappin à étanchéité renforcée qui lui alimente le crible vibrant avec un matériau relativement plus liquide.

La partie liquide recueillie après séparation sur le crible vibreur peut être envoyée dans un réservoir tampon dont le volume est au moins égal à celui du grappin à étanchéité renforcée dont il est ainsi possible d'absorber le complet déversement sans provoquer des refus dus à un éventuel bouchage en aval du dispositif de déchargement.

Il est également avantageux de prévoir un ensemble de régulation et de sécurité apte à assurer l'isolement du four tournant d'incinération en cas d'anomalie de fonctionnement et à débloquer automatiquement des vannes d'aspiration et de refoulement de la pompe d'injection de la partie liquide.

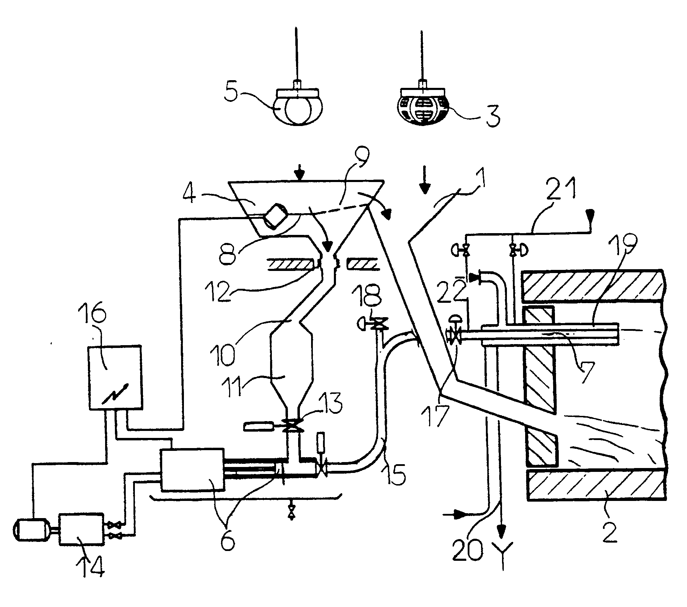

Les avantages de l'invention sont décrits dans la description détaillée qui suit d'un mode de réalisation préféré de l'invention représenté schématiquement sur la planche unique annexée.

Sur cette planche unique est représentée une unité de chargement d'un four tournant d'incinération d'une installation de traitement de déchets industriels. A l'encontre des déchets domestiques la nature et la présentation des déchets industriels sont extrêmement variées et les arrivages peu prévisibles. Les déchets pâteux, nu pompables ni pelletages sont particulièrement difficiles à éliminer car comme indiqué dans le préambule du présent mémoire, ils conduisent pour différentes raisons à une usure prématurée des réfractaires du four et obligent à des fréquentes interruptions de l'unité d'incinération.

Ces déchets arrivent à l'installation d'incinération en vrac et sont déversés par les camionneurs directement dans des fosses de réception. Notons que l'approvisionnement est parfois sous forme du fûts, mais que ceux-ci sont directement déversés dans le four par une bouche spécifique d'introduction et ne seront donc pas ici pris en compte

Suivant les quantités de déchets fournis, ces fosses de réception peuvent recevoir des produits de différentes origines sous condition naturellement d'une analyse préalable assurant l'inocuité de tels mélanges. Aussi-peut-on avoir des produits pâteux peu visqueux mélangés à des solides.

Le dispositif selon l'invention comporte essentiellement une trémie 1 d'alimentation du four tournant 2, réceptionnant les matières délivrées par un grappin 3, un crible vibreur 4 alimenté par un grappin étanche 5 essentiellement en pâteux enrichis en liquide, une pompe d'injection 6 envoyant la partie liquide, séparée dans le crible vibreur 4, à l'intérieur du four tournant 2 grâce à une canne d'injection 7.

La trémie d'alimentation 1 doit être échancrée, avec un capotage de déversement des parties solides triées par le crible vibreur 4. Elle dessert une goulotte 8 d'alimentation du four tournant 2.

Si la fosse de réception contient des déchets solides d'assez grandes dimensions, il est préférable de commencer par la vidanger à l'aide du grappin 3 à coquilles ajourées qui laisse retomber environ 80% des liquides. Ce grappin 3, dont la charge est donc essentiellement composée de solides, déverse directement dans la trémie d'alimentation 1, de sorte qu'un prétriage grossier est ainsi assuré qui évite que des pièces trop lourdes ne passent par le crible vibreur 4.

Dès que l'on constate que le grappin 3 à coquilles ajourées est devenu pratiquement sans effet, c'est-à-dire que la fosse de réception ne contient plus que des produits pâteux enrichis en liquide, on utilise un grappin 5 à étanchéité renforcée qui alimente le crible vibreur 4.

Comme schématisé, le crible vibreur 4 est juxtaposé à la trémie 1 d'alimentation.

Le crible vibreur 4 est essentiellement constitué d'une trémie mue en vibration sous laquelle est placé un extracteur cribleur. La superposition des deux mouvements vibratoires assurent une bonne séparation des liquides et des solides.

La trémie du crible vibreur 4 a une forme d'entonnoir dont elle assure les fonctions. Elle est de préférence en tôle épaisse et pourvue sur trois côtés de panneaux de protection, également en tôle épaisse, posés indépendant et statiques et dony la superposition à la trémie assure l'étanchéité. De plus, les panneaux fixes de protection constituent la charpente support du crible vibreur. La mise en vibration de la trémie du crible vibreur 4 est de préférence assurée par deux moteurs autosynchrones. Ainsi, l'aspiration des produits par l'entonnoir s'effectue de façon continue sans bouchage et de plus il se produit un certain décolmatage des parois de la trémie du crible vibreur 4.

Après être passé par cet entonnoir formé par le trémie du crible vibreur 4, le matériau est déversé sur l'extracteur cribleur qui effectue la séparation des liquides et des solides. Cette séparation a lieu sur sa partie centrale 8 réservée à la surface vibrante constituée par une toile métallique anticolmatante et à mailles assez larges par exemple de 25 x 35 mm. Cette toile est montée tendue sur un cadre permettant un dégagement latéral. La partie arrière 9 de l'extraceur est conçue pour extraire le produit et le transporteur jusqu'à la trémie 1 d'alimentation en produits solides. Deux moteurs à balourds réglables propagent la vibration unidirectionnelle de l'extracteur cribleur.

Il doit bien être remarqué qu'un tel crible ne permet qu'une séparation très imparfaite des liquides et des solides - résidus de peinture, polymétacrylates - une parfaite séparation serait pratiquement impossible à obtenir et nécessiterait pour être mise en oeuvre des installations de stockage intermédiaires et la présence continuelle d'une main d'oeuvre nouvelle à proximité de ces installations supplémentaires. Or, même si on fait abstraction de l'aspect purement financier, il n'est pas souhaitable d'exposer en permanence du personnel à proximité immédiate de produits pouvant être assez nocifs.

En pratique, la séparation est largement suffisante pour que les produits dits solides n'aient plus tendance à s'étaler à l'entrée du four tournant 2 et pour que les produits dits liquides soient pompés, ce qui est possible dès qu'ils ne contiennent que des particules de moins de 50 mm. De plus, une telle séparation absorbe très largement des produits de granulométries très hétérogènes typiques des déchets industriels.

La partie liquide est injectée pour incinération au coeur même du four grâce à la canne d'injection 7 alimentée par la pompe 6. De préférence, il est prévu d'aménager dans la conduite d'alimentation 10 le crible vibrant 4 et la pompe 6, une réserve 11 capable d'absorber au moins tout un volume du grappin à étanchéité et de préférence de 2 à 3 volumes, une capacité de 800 litres donne par exemple toute satisfaction. Cette réserve 10 est reliée au crible vibrant 4 par un raccord souple 12. Sur la conduite d'alimentation 10 sont de préférence prévues des manchettes démontables et des portes de visite, ceci afin de faciliter l'entretien de l'installation.

Une vanne à glissière 13 de préférence en acier trempé, d'entretien aisé, permet au liquide de s'écouler jusqu'à la pompe d'injection 6 conçue spécialement pour véhiculer des déchets liquides au sens de l'invention comprenant encore de nombreuses particules solides passant au travers des mailles du crible vibreur 4. La pompe d'injection 6 est une pompe à piston actionnée par un groupe hydraulique 14 sous pression d'huile. Elle peut fonctionner en refoulement vers la canne d'injection 7 ou en aspiration pour la vidange de la canne 7 et de la tuyauterie de distribution 15. La pompe est étanchée par une vanne à glissière 17.

Le cylindre hydraulique du piston est en construction massive avec amortisseur en fin de course, les interrupteurs de fin de course étant montés aux extrémités du cylindre hydraulique. L'étanchéité est assurée par des joints.

A titre indicatif, des résultats industriels parfaitement satisfaisants - aucune panne prolongée en un an - ont été obtenus avec une pompe dont le débit est de 3,75 m³/heure et une pression maximum de 10 bars ($10^6$ Pascal), le piston en acier chromé ayant 150 mm de diamètre et une course de réfoulement de 400 mm.

Le groupe de commande hydraulique 14 est de préférence compact et installé directement sur la pompe. Il se compose essentiellement d'un moteur électrique à refroidissement à l'eau ou à l'air, d'une puissance supérieure à 5 kilowatts et de pompes réglables à pistons radiaux. De préférence, toutes les conduites de puissance et le moteur sont installés au-dessus d'amortisseurs de vibration. L'ensemble est monté sur une cuve à huile.

Sous l'ensemble de la pompe 6 et du groupe hydraulique est amenagée une cuvette de rétention 16 servant pour les opérations de dégorgement.

L'ensemble de la pompe 6 et de son groupe hydraulique 14 est contrôlé depuis une armoire de commande 16 où des témoins signalent notamment la température de l'huile, le niveau du liquide. Le contrôle du débit est de préférence manuel, la pression étant réglée grâce à une vanne manuelle avec manomètre.

Une telle pompe 6 permet d'injecter des liquides à des débits extrêment divers adaptés au mieux au type de chargement stocké dans la fosse de réception.

De préférence, il est prévu un système d'alarme pour le retour et une vanne de sécurité en cas d'accident.

Le système d'alarme pour le retour a pour but d'assurer le fonctionnement malgré un blocage. Pour celà, la cylindre hydraulique du piston est équipé avec un pressostat (mesure de variation de pression) qui affiche un signal constant en cas de bon fonctionnement et dont la variation indique un blocage de la pompe. Ceci interrompt l'enregistrement régulier des signaux envoyés par un relais électrique temporisé et reçus par la commande électrique, de sorte que dès qu'un laps de temps prévu s'écoule sans signal, le dispositif hydraulique assure le retour du piston. La remise en service de la pompe est également automatique, son arrêt pour dérangement ne s'effectuant qu'après trois vaines tentatives, le système est donc auto-débloquant et peut absorber des particules solides même d'un diamètre important, ce qui permet de ne pas perturber inutilement l'exploitation de l'installation.

A cet ensemble de régulation s'ajoute un ensemble de sécurité qui assure l'isolement du four tournant 2 d'incinération en cas d'anomalie importante de fonctionnement, notamment en cas de brusque élévation de la température et/ou de la pression. Cet ensemble de sécurité comporte essentiellement une vanne de sécurité 17 à commande pneumatique qui doit être ouverte avant tout fonctionnement. Le cylindre de commande de la vanne 17 est muni de préférence d'un ressort pour assurer sa fermeture même en cas de panne pneumatique ou électrique. Pour permettre le retour du piston de la pompe 6 après fermeture de la vanne de sécurité 17, il est prévu une vanne sphérique 18 de mise à l'air libre de la conduite 15. Cette vanne 18 est naturellement couplée avec la vanne de sécurité 17.

Le liquide atteint enfin la canne d'injection 7 qui s'avance dans le four tournant 2 sur une longueur par exemple de l'ordre de 2-3 mètres et est donc de ce fait équipée d'un circuit de refroidissement à l'eau 19 alimenté par les canalisations 20.

Cette canne d'injection sert à pulvériser le jet de déchets liquides et reçoit par les canalisations 21 la vapeur nécessaire à cette pulvérisation. La vapeur est de préférence délivrée sous une pression élevée et de préférence supérieure à 10. La combustion des déchets pulvérisés est assurée par un soufflage d'air comburant par le canal 22.

L'ensemble de chargement d'un four d'incinération de déchets industriels est remarquablement robuste, et de ce fait tout à fait adapter au problème de l'élimination de ces déchets. De plus, il peut être sans difficulté surajouté à une installation déjà en fonctionnement et qui peut ainsi élargir ses normes d'acceptation des déchets aux produits pâteux imbibés de liquides ni pompables ni pelletables. De plus, le traitement des déchets ne doit plus être interrompu très fréquemment pour casser l'épaisse croûte de lave qui se formait à l'entrée du four tournant lorsque des déchets pâteux imbibés de liquides y étaient introduits par la trémie de chargement des solides. A cette suppression des fréquentes interruptions s'ajoute une augmentation de la durée de vie des réfractaires qui ne subissent plus ni les attaques brûtales dues à la formation instantanées de vapeur ni les attaques de marteau-piqueur. Enfin et ce n'est pas le moindre avantage, les conditions de travail du personnel sont nettement améliorées étant donné qu'ils n'ont plus à travailler dans les fours non entièrement refroidis.

## Revendications

1. Procédé de traitement par incinération dans un four tournant (2) de déchets industriels constitués au moins pour partie de produits pâteux non pompables, où on effectue une séparation grossière à l'aide d'un crible vibrant (4) alimenté avec un produit pâteux enrichi en liquides, en une partie solide et en partie liquide, on introduit ladite partie solide dans le four par une trémie d'alimentation (1) en matériaux solide, et on projette ladite partie liquide à l'intérieur du four tournant et à distance de la zone d'enfournement.

2. Dispositif pour la mise en oeuvre du procédé selon la revendication 1 **caractérisé en ce qu'**il comporte une trémie (1) d'alimentation du four tournant (2), réceptionnant les matières solides délivrées par un grappin (3), un crible vibreur (4) réceptionnant les produits pâteux enrichis en liquides par un grappin étanche (5), une pompe d'injection (6) et une canne d'injection (7).

3. Dispositif selon la revendication 2, **caractérisé en ce que** la pompe d'injection (6) est une pompe à piston acceptant des particules solides dont la taille n'excède par 50 mm.

4. Dispositif selon la revendication 2 ou 3, **caractérisé en ce qu'**une réserve (11) formant volume tampon est prévue dans la conduite d'alimentation (10) entre le crible vibreur (4) et la pompe d'injection (6).

5. Dispositif selon la revendication 2 à 4, **caractérisé en ce que** la trémie d'alimentation (1) est alimentée par un grappin à coquilles ajourées (3) alors que le crible vibreur (4) est alimenté par un grappin (5) à étanchéité renforcée.

6. Dispositif selon une des revendications 2 à 5, **caractérisé en ce qu'**est prévue entre la canne d' injection (7) et la pompe d'injection (6) une vanne de sécurité (17).

7. Dispositif selon une des revendications 2 à 6, **caractérisé en ce que** la canne d'injection (7) est alimentée par une canalisation (21) en vapeur afin de pulvériser la partie liquide des déchets.

## Claims

1. Process for the treatment by incineration in a rotary furnace (2) of industrial waste at least partly constituted by unpumpable pasty products, where a coarse separation takes place with the aid of a vibrating screen (4) supplied with a liquid-enriched, pasty product, which is in part solid and in part liquid, said solid part being introduced into the furnace by a solid material supply hopper (1) and said liquid part is sprayed into the interior of the rotary furnace and at a distance from the charging area.

2. Apparatus for performing the process according to claim 1, characterized in that it comprises a hopper (1) for supplying the rotary furnace (2) receiving the solid material supplied by a grab (3), a vibrating screen (4) receiving the liquid-enriched pasty products supplied by a tight grab (5), an injection pump (6) and an injection rod (7).

3. Apparatus according to claim 2, characterized in that the injection pump (6) is a piston pump accepting solid particles, whose size does not exceed 50 mm.

4. Apparatus according to claims 2 or 3, characterized in that a reserve (11) forming a buffer volume is provided in the supply pipe (10) between the vibrating screen (4) and the injection pump (6).

5. Apparatus according to claims 2 to 4, characterized in that the supply hopper (1) is supplied by a grab (3) having perforated shells, whereas the vibrating screen (4) is supplied by a grab (5) with reinforced tightness.

6. Apparatus according to one of the claims 2 to 5, characterized in that a safety valve (17) is provided between the injection rod (7) and the injection pump (6).

7. Apparatus according to one of the claims 2 to 6, characterized in that the injection rod (7) is supplied with steam by a duct (21) in order to atomize the liquid part of the waste.

## Ansprüche

1. Verfahren zur Verbrennung von Industrieabfällen in einem Trommelofen (2), die zumindest teilweise aus nicht pumpfähigen, dickflüssigen Produkten bestehen, bei dem unter Zuhilfenahme eines Vibratorsiebs (4), dem ein dickflüssiges, mit Flüssigkeiten angereichertes Produkt zugeführt wird, eine grobe Trennung in einen festen und einen flüssigen Teil erfolgt, der feste Teil durch einen Zuführtrichter (1) aus festem Material in den Ofen eingeführt wird und der flüssige Teil in das Innere des Trommelofens und in Entfernung zum Beschickungsbereich gespritzt wird.

2. Vorrichtung zur Durchführung des Verfahrens nach Anspruch 1, **dadurch gekennzeichnet,** daß diese einen Zuführtrichter (1) des Trommelofens (2) aufweist, der die festen Materialien, die von einem Greifer (3) zugeführt werden, aufnimmt, sowie ein Vibratorsieb (4), das die mit Flüssigkeiten angereicherten, dickflüssigen Produkte durch einen undurchlässigen Greifer (5) aufnimmt, eine Einspritzpumpe (6) und ein Einspritzrohr (7).

3. Vorrichtung nach Anspruch 2, **dadurch gekennzeichnet,** daß die Einspritzpumpe (6) eine Kolbenpumpe ist, die feste Partikel, deren Größe 50 mm nicht übersteigt, annimmt.

4. Vorrichtung nach Anspruch 2 oder 3, **dadurch gekennzeichnet,** daß in der Zuleitung (10) zwischen dem Vibratorsieb (4) und der Einspritzpumpe (6) ein Speicher (11), der einen Puffer darstellt, vorgesehen ist.

5. Vorrichtung nach Anspruch 2 bis 4, **dadurch gekennzeichnet,** daß der Zuführtrichter (1) von einem Greifer mit durchbrochenen Schaufeln (3) beschickt wird, während das Vibratorsieb (4) von einem Greifer (5) mit erhöhter Undurchlässigkeit beschickt wird.

6. Vorrichtung nach einem der Ansprüche 2 bis 5, **dadurch gekennzeichnet,** daß zwischen dem Einspritzrohr (7) und der Einspritzpumpe (6) ein Sicherheitsventil (17) vorgesehen ist.

7. Vorrichtung nach einem der Ansprüche 2 bis 6, **dadurch gekennzeichnet,** daß das Einspritzrohr (7) von einer Dampfleitung (21) gespeist wird, um den flüssigen Teil der Abfälle zu zerstäuben.